# EUROPEAN PATENT SPECIFICATION

(11) **EP 4 148 491 B1**
(45) Date of publication and mention of the grant of the patent: **07.10.2026**
(21) Application number: 21799767.5
(22) Date of filing: 28.04.2021
(51) Int. Cl.: G02F 1/163, E06B 9/24, E06B 3/67

(54) **METHOD FOR CONTROLLING ELECTROCHROMIC GLASS, AND ELECTROCHROMIC GLASS**
VERFAHREN ZUR STEUERUNG VON ELEKTROCHROMEM GLAS UND ELEKTROCHROMES GLAS
PROCÉDÉ DE COMMANDE DE VERRE ÉLECTROCHROME, ET VERRE ÉLECTROCHROME

(30) Priority: 08.05.2020 CN 202010383716
(43) Date of publication of application: 15.03.2023
(73) Proprietor: Shenzhen Guangyi Tech Co., Ltd., Shenzhen, Guangdong 518133 (CN)
(72) Inventor: SHI, Zhirui, Shenzhen, Guangdong 518133 (CN)
(74) Representative: Ricker, Mathias
(86) International application number: PCT/CN2021/090508
(87) International publication number: WO 2021/223636

(56) References cited:
- CN-A- 106 200 187
- CN-A- 106 200 187
- CN-A- 106 773 439
- CN-A- 107 089 182
- CN-A- 110 109 256
- CN-A- 110 573 939
- CN-A- 110 646 951
- CN-A- 110 992 840
- CN-A- 111 474 797
- CN-U- 205 720 867
- JP-A- 2009 294 183
- JP-A- 2018 010 084
- US-A1- 2006 158 715
- US-A1- 2013 161 971
- US-A1- 2019 171 081
- US-A1- 2019 263 317
- US-A1- 2020 019 034

## Description

### TECHNICAL FIELD

Embodiments of the present application relate to the technical field of chromatism devices, for example, a method for controlling an electrochromic glass and an electrochromic glass.

### BACKGROUND

An electrochromic material is used in electrochromic glass buildings. The electrochromic material can undergo a stable and reversible oxidation-reduction reaction under the action of an applied electric field so that optical properties (transmittance, reflectance and absorptance) of the material change. An application of electrochromic glass can achieve a series of effects such as controllable chromatism, building energy conservation and glare blocking. An application of the electrochromic glass in buildings (specially in commercial buildings), aerospace and automobile manufacturing is steadily increased.

Generally, a photosensor is mounted on an outer wall of a building so that a solar luminous intensity is detected by the photosensor and transmittance of the electrochromic glass is adjusted according to the solar luminous intensity, thereby softening indoor light.

However, in the related art, methods for adjusting the transmittance of electrochromic glass have many disadvantages in practical use.

The CN 106,200,187 A discloses a dimming glass, a controllable shading device and method and a vehicle. The dimming glass comprises a plurality of dimming areas, and the light transmittance of all the dimming areas can be independently adjusted. The controllable shading device comprises the dimming glass, and further comprises a light intensity probing unit for probing the light intensity of light penetrating the dimming glass and a light-penetrating control unit for controlling and adjusting the light transmittance of the dimming areas according to the light intensity.

The CN 106,773,439 A discloses an electrochromic system which comprises a first luminous intensity sensor module, a second luminous intensity sensor module, a control module and an electrochromic module, wherein the first luminous intensity sensor module is connected with one input end of the control module; the second luminous intensity sensor module is connected with the other input end of the control module; and the control module is connected with the electrochromic module.

The US 2019/0171081 A1 discloses a method of controlling tint of a tintable window in a building. The method comprises defining one or more threshold values of environmental conditions across a defined time period, defining two or more discrete tint state values for the tintable window, and if the input readings during the defined time period cross one or two of the one or more threshold values, sending a tint command to transition the tintable window from a first tint state toward a second tint state and not transitioning further during a lockout period. US 2019/263317 A1 also constitutes background art useful for understanding the invention.

### SUMMARY

The present application provides a method for controlling an electrochromic glass and an electrochromic glass, so as to achieve that a transmittance of the electrochromic glass is accurately controlled so that an adjustment result reaches an expected target as much as possible.

The invention is set out in the appended set of claims.

### BRIEF DESCRIPTION OF DRAWINGS

FIG. 1 is a flowchart of a method for controlling an electrochromic glass according to embodiment one of the present application.
FIG. 2 is a flowchart of a method for controlling an electrochromic glass according to embodiment two of the present application.
FIG. 3 is a flowchart of a method for controlling an electrochromic glass according to embodiment three of the present application.
FIG. 4 is a flowchart of a method for controlling an electrochromic glass according to embodiment five of the present application.
FIG. 5 is a block diagram illustrating a composition of an electrochromic glass according to embodiment seven of the present application.
FIG. 6 is a structure diagram of an electrochromic glass according to embodiment seven of the present application.
FIG. 7 is a structure diagram of another electrochromic glass according to embodiment seven of the present application.
FIG. 8 is a structure diagram of an alternative embodiment of another electrochromic glass according to embodiment seven of the present application.
FIG. 9 is a structure diagram of another electrochromic glass according to embodiment seven of the present application.
FIG. 10 is a schematic diagram illustrating an application of an electrochromic glass according to embodiment eight of the present application.

### DETAILED DESCRIPTION

In the related art, a method for adjusting a transmittance of an electrochromic glass has many deficiencies in practical use. The transmittance of the electrochromic glass often cannot be accurately adjusted to a transmittance most suitable for a user and requires to be further manually adjusted by the user, resulting in poor usage experience.

The present application is described below in conjunction with drawings and embodiments. Embodiments of the present application provide a method for controlling an electrochromic glass, where the electrochromic glass includes an electrochromic layer. The method for controlling the electrochromic glass includes the steps described below.

An adjustment instruction is generated based on a second illuminance of ambient light passing through the electrochromic layer, where the adjustment instruction carries a control signal.

The adjustment instruction is transmitted to the electrochromic layer to adjust a transmittance of the electrochromic layer according to the control signal.

In an embodiment, the following step is further included.

The adjustment instruction is generated based on a first illuminance and the second illuminance, where the first illuminance is an illuminance of the ambient light before entering the electrochromic layer.

In an embodiment, the adjustment instruction being generated based on the first illuminance and the second illuminance includes the steps described below.

A first transmittance to which the transmittance of the electrochromic layer is to be adjusted is determined according to the first illuminance.

Whether the transmittance of the electrochromic layer is adjusted to the first transmittance is determined.

If the transmittance of the electrochromic layer is adjusted to the first transmittance, a second illuminance signal is received from a second sensor configured to detect the second illuminance. Whether the second illuminance is within a preset range is determined.

If the second illuminance is outside of the preset range, the adjustment instruction is generated, where the adjustment instruction carries a first control signal; when the second illuminance is greater than a maximum value of the preset range, the first control signal is configured to reduce the transmittance of the electrochromic layer; and when the second illuminance is less than a minimum value of the preset range, the first control signal is to improve the transmittance of the electrochromic layer.

In an embodiment, the adjustment instruction being generated based on the first illuminance and the second illuminance includes the steps described below.

A second transmittance to which the transmittance of the electrochromic layer is to be adjusted is determined according to the second illuminance detected by a second sensor.

Whether the second transmittance is lower than a preset transmittance is determined.

If the second transmittance is lower than the preset transmittance, a first illuminance signal is received from a first sensor configured to detect the first illuminance.

Whether the first illuminance is less than a minimum value of a preset range is determined.

If the first illuminance is less than the minimum value of the preset range, the adjustment instruction is generated, where the adjustment instruction carries a second control signal configured to improve the transmittance of the electrochromic layer.

The adjustment instruction is generated, where the adjustment instruction carries a second control signal configured to improve the transmittance of the electrochromic layer.

In an embodiment, the adjustment instruction being generated based on the second illuminance of the ambient light passing through the electrochromic layer further includes the steps described below.

A third transmittance to which the transmittance of the electrochromic layer is to be adjusted is determined according to the second illuminance.

The adjustment instruction is generated, where the adjustment instruction carries a third control signal configured to adjust the transmittance of the electrochromic layer to the third transmittance. In an embodiment, before generating the adjustment instruction based on the second illuminance of the ambient light passing through the electrochromic layer further includes the steps described below.

Whether a working time period corresponding to a current time is a preset working time period is determined.

If the working time period corresponding to the current time is the preset working time period, the adjustment instruction is generated based on the second illuminance of the ambient light passing through the electrochromic layer; and if the working time period corresponding to the current time is outside of the preset working time period, an adjustment instruction for adjusting the transmittance of the electrochromic layer to a specified transmittance is generated.

In an embodiment, the electrochromic layer includes at least one electrochromic cell whose transmittance is capable of being separately adjusted, and the adjustment instruction further carries a dimming sequence signal and is configured to control the transmittance of the at least one electrochromic cell to be sequentially adjusted according to the dimming sequence signal.

### Embodiment one

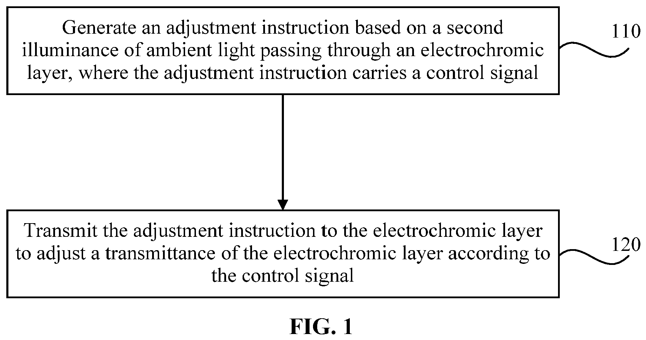

FIG. 1 is a flowchart of a method for controlling an electrochromic glass according to embodiment one of the present application. The present embodiment can be applicable to the case where the transmittance of the electrochromic glass is automatically adjusted. The method can be performed by a processor module of the electrochromic glass, where the processor module is integrated as a component of the electrochromic glass into a structure of the electrochromic glass. The method includes the steps described below.

In step 110, an adjustment instruction is generated based on a second illuminance of ambient light passing through an electrochromic layer, where the adjustment instruction carries a control signal. Electrochromic glass has been commonly used in buildings, vehicles and other fields. In the present application, the electrochromic glass includes an electrochromic layer. Taking the electrochromic layer as a boundary, the space inside a building or a vehicle is regarded as an interior space, and the space outside the building or the vehicle is regarded as an ambient space. The above ambient light is light from the ambient space, such as sunlight or direct light. Exemplarily, the basic structure of the electrochromic glass is composed of a glass substrate, an intermediate film of laminated glass, an electrochromic layer, an intermediate film of laminated glass and a glass substrate. The electrochromic layer, which is a core of the entire electrochromic glass, is a layer where a chromatism reaction occurs. The phenomenon of stable and reversible change in the optical properties (such as reflectance, transmittance and absorptance) of the electrochromic layer under the action of an applied voltage is manifested as a reversible change in the color and transparency of the electrochromic glass in appearance. When the illuminance of the ambient light is changed, the transmittance of the electrochromic layer is adjusted (for example, when the illuminance of the ambient light is enhanced, the transmittance of the electrochromic layer is adjusted to be lower; and when the illuminance of the ambient light is reduced, the transmittance of the electrochromic layer is adjusted to be higher) so that light in the interior space can be maintained to be soft. Therefore, an accurate response to the change in the illuminance of the ambient light is particularly important. In the present embodiment, a second sensor is disposed on a side of the electrochromic layer facing the interior space so that the second illuminance of the ambient light passing through the electrochromic layer is detected, and when the illuminance detection is performed, a light-sensing surface of the second sensor faces in a direction toward the incidence of the ambient light. On the one hand, what is detected is a luminous intensity of light actually incident into the indoor environment, which reflects a more real feeling of a user. On the other hand, the above second sensor is disposed in the interior space, and thus is not easily affected by an uncontrollable external environmental factor, thereby significantly improving the detection accuracy and stability. The processor module generates the adjustment instruction based on the second illuminance, where the adjustment instruction carries the control signal. A voltage applied to the electrochromic layer is controlled by the control signal, where the electrochromic layer may be a flexible or rigid sheet layer with adjustable transmittance and made of one layer of material or a combination of multiple layers of materials, including types such as polymer dispersed liquid crystal (PDLC) glass, a suspended particle device (SPD) and electrochromic (EC) glass. In the embodiment of the present application, the side of the electrochromic layer facing the interior space is a side of the electrochromic layer facing away from the incidence of the ambient light.

EC glass having a particular structure is used as an example for describing a process of adjusting the transmittance of the electrochromic layer by the control signal. The electrochromic layer includes a first conductive substrate layer, an electrochromic material layer, an electrolyte layer, an ion storage layer and a second conductive substrate layer, where the electrochromic material layer is changed under the action of a voltage so that a color of the electrochromic material layer is changed, the electrolyte layer provides a transmission channel of ions between the electrochromic material layers, and the ion storage layer functions to store ions and balance charges. When a reverse voltage is applied, ions in the electrochromic material layer return to the ion storage layer, and the color of the electrochromic layer is restored.

In step 120, the adjustment instruction is transmitted to the electrochromic layer so that a transmittance of the electrochromic layer is adjusted according to the control signal.

An automatic adjustment mechanism of the transmittance of the electrochromic glass is as follows: a preset value of illuminance is set, the detected illuminance is compared with the preset value of illuminance, and the transmittance of the electrochromic glass is adjusted according to a preset automatic adjustment rule. A preset range corresponding to the preset value of illuminance may be set according to a specific usage scenario. For example, in an office scenario, the preset range may be set to 400 to 600 lux, and in a library scenario, the preset range may be set to 200 to 400 lux. In some particular usage scenarios, the above preset range may also be set to a single point value. Exemplarily, the above preset automatic adjustment rule is as follows: whether the second illuminance is within the preset range is determined. When the detected second illuminance is greater than a maximum value of the preset range, the second illuminance of light entering the interior space through the electrochromic layer is greater than an expected target, indicating that the current transmittance of the electrochromic layer is too high. In this case, the processor module generates a corresponding feedback control signal to control the electrochromic layer to reduce the transmittance. If the detected second illuminance is less than a minimum value of the preset range, the second illuminance of light entering the interior space through the electrochromic layer is less than an expected target, indicating that the transmittance of the current electrochromic layer is too low. In this case, the processor module generates a corresponding feedback control signal to control the electrochromic layer to improve the transmittance so that the illuminance of light passing through the electrochromic glass reaches the expected target of softening indoor light. If the detected second illuminance is within the preset range, the transmittance of the electrochromic layer meets the requirement, and no feedback adjustment is required.

The electrochromic layer may be a flexible or rigid sheet layer with adjustable transmittance and made of one layer of material or a combination of multiple layers of materials, such as PDLC glass, an SPD and EC glass. In the present embodiment, when the illuminance of the ambient light is relatively high, reducing the transmittance of the electrochromic layer is conducive to preventing strong glare from affecting the user; when the illuminance of the ambient light is relatively low, improving the transmittance of the electrochromic layer is conducive to the use of light in the ambient space for lighting to a certain extent, thereby reducing the energy consumption of an illumination system of the interior space. Moreover, the electrochromic layer can block part of infrared, reduce heat dissipation from the interior space and reduce heat entry from the external ambient space, effectively reducing the energy consumption of an air conditioning system.

In the technical solution of the present embodiment, the second illuminance of the ambient light entering the interior space through the electrochromic layer is acquired, the second illuminance is compared with the preset value of illuminance to obtain the corresponding feedback control signal, the transmittance of the electrochromic layer currently suitable for the interior space is determined according to the feedback of the second illuminance, and the feedback adjustment is performed on the electrochromic layer, so that the transmittance of the electrochromic glass is accurately adjusted.

Embodiment two; embodiment two is not according to the appended claims.

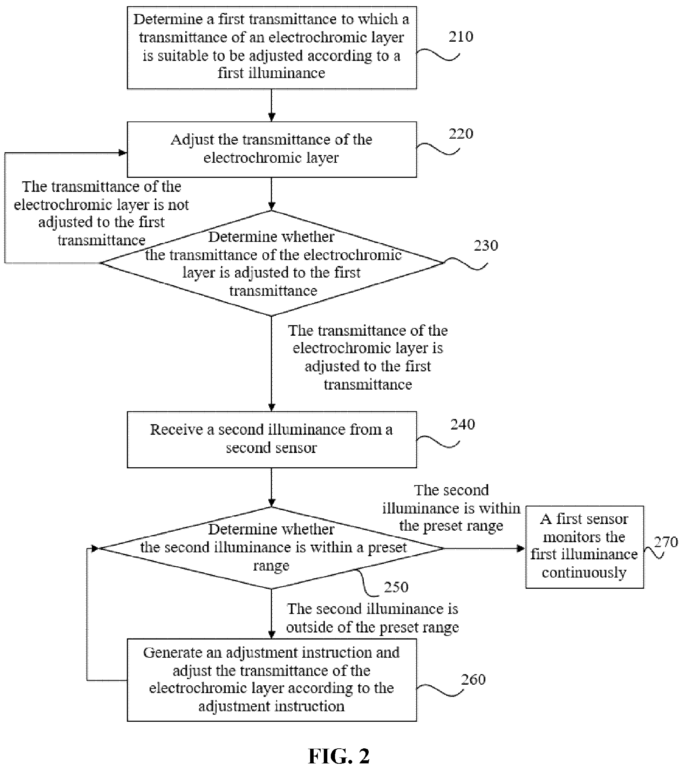

FIG. 2 is a flowchart of a method for controlling an electrochromic glass according to embodiment two of the present application. As shown in FIG. 2, specific steps are described below.

In step 210, a first transmittance to which a transmittance of an electrochromic layer is to be adjusted is determined according to first illuminance.

In the embodiment of the present application, a first sensor is disposed on a side of the electrochromic layer facing the ambient space, and a light-sensing surface faces a light incident side of ambient light. The first illuminance is an illuminance of the above ambient light before entering the electrochromic layer and is detected by the first sensor. The first transmittance to which the transmittance of the electrochromic layer is suitable to be adjusted is determined according to the first illuminance. Exemplarily, if the first illuminance exceeds a maximum value of a preset interval, it is indicated that outdoor light is relatively strong. To avoid too strong intensity of light entering an interior space through the electrochromic layer, it is necessary to adjust the transmittance of the electrochromic layer to be lower. If the first illuminance is less than a minimum value of the preset interval, it is indicated that outdoor light is relatively dark and it is necessary to adjust the transmittance of the electrochromic layer to be higher. A correspondence relationship between the illuminance and the transmittance of electrochromic layer is pre-stored in a processor module, and the processor module can determine a value of the first transmittance matched with the detected first illuminance. In the embodiment of the present application, the side of the electrochromic layer facing the ambient space is a side of the electrochromic layer facing the incidence of the ambient light.

In step 220, the transmittance of the electrochromic layer is adjusted.

The processor module adjusts the transmittance of the electrochromic layer according to the above first transmittance and generates an adjustment completion signal after completing the adjustment. In step 230, whether the transmittance of the electrochromic layer is adjusted to the first transmittance is determined; if the transmittance of the electrochromic layer is adjusted to the first transmittance, step 240 is performed; and if the transmittance of the electrochromic layer is not adjusted to the first transmittance, the method returns to step 220.

After receiving an adjustment completion signal, the processor module detects a current transmittance of the electrochromic layer and determines whether the transmittance of the electrochromic layer is adjusted to the first transmittance. If the transmittance of the electrochromic layer is adjusted to the first transmittance, the method goes to step 240. If the transmittance of the electrochromic layer is not adjusted to the first transmittance, the adjustment is continued until the transmittance of the electrochromic layer reaches the first transmittance.

In step 240, a second illuminance is received from a second sensor.

The second illuminance is received from the second sensor, so as to determine a luminance of the ambient light entering the interior space through the electrochromic layer after the transmittance of the electrochromic layer is adjusted to the first transmittance. In the present embodiment, the second sensor may be kept in a continuous on state or may be awakened in, before or after any one of the steps before step 240. As a preferred embodiment, after it is determined that the transmittance of the electrochromic layer has been adjusted to the first transmittance, the second sensor is awakened.

In step 250, whether the second illuminance is within a preset range is determined; if the second illuminance is outside of the preset range, step 260 is performed; if the second illuminance is within the preset range, step 270 is performed.

Whether the second illuminance is within the preset range is determined, where the preset range is an illuminance range preset in the processor module, for example, an illuminance range that makes a person feel comfortable. When the second illuminance is outside of the preset range, it is indicated that further feedback adjustment requires to be performed on the illuminance of the electrochromic layer, that is, the first transmittance of the electrochromic layer adjusted according to the first illuminance is not suitable for the current indoor illuminance requirement, and further feedback adjustment requires to be performed according to the second illuminance. When the second illuminance is within the preset range, it is indicated that the adjusted transmittance of the electrochromic layer meets the requirement and no feedback adjustment is required. Generally, when the illuminance of the ambient light is in the vicinity of a boundary value of the preset interval corresponding to the first illuminance, the first illuminance detected by the first sensor is sometimes within the preset interval or sometimes outside of the preset interval. In this case, if the transmittance of the electrochromic layer is adjusted only according to the first illuminance, the transmittance of the electrochromic glass is continuously switched. Alternatively, due to a detection error of the first sensor, although the first illuminance is actually within/outside of the preset interval, the detection result shows the first illuminance is outside of/within the preset interval. In this case, the adjustment of the transmittance of the electrochromic layer adjusted only according to the first illuminance will cause a deviation. Therefore, the further feedback adjustment requires to be performed according to the second illuminance so that the adjustment accuracy of the transmittance of the electrochromic layer is improved, thereby achieving the expected target as much as possible and meeting a real requirement of a user.

In step 260, an adjustment instruction is generated, and the transmittance of the electrochromic layer is adjusted according to the adjustment instruction.

When the second illuminance is not within the preset range, two cases are included: when the second illuminance is greater than a maximum value of the preset range, for example, the intensity of light entering the interior space through the electrochromic layer is greater than a maximum light intensity allowing human comfort, it is necessary to adjust the transmittance of the electrochromic layer to be lower to reduce the intensity of light entering the interior space is reduced, and a first control signal carried in the adjustment instruction generated by the processor module is configured to reduce the transmittance of the electrochromic layer; and when the second illuminance is less than a minimum value of the preset range, for example, the intensity of light entering the interior space through the electrochromic layer is less than a minimum light intensity allowing human comfort, it is necessary to adjust the transmittance of the electrochromic layer to be higher to improve the intensity of light entering the interior space, and a first control signal carried in the adjustment instruction generated by the processor module is configured to improve the transmittance of the electrochromic layer.

The transmittance of the electrochromic layer is adjusted according to the control signal in the generated adjustment instruction so that the illuminance of light passing through the electrochromic layer reaches the expected target of softening indoor light.

In addition, the control signal mentioned in embodiment one includes the first control signal mentioned in embodiment two and further includes a second control signal and a third control signal mentioned below.

In step 270, the first illuminance is continuously monitored by the first sensor.

When the second illuminance is within the preset range, it is indicated that the adjusted first transmittance of the electrochromic layer meets the requirement and no feedback adjustment is required. Therefore, the first sensor continues to monitor the first illuminance, waits for the next adjustment. Then, when the first illuminance is not within the preset interval, the transmittance of the electrochromic layer is adjusted according to the first transmittance corresponding to the first illuminance again. In this case, no feedback adjustment is required. The second sensor may be kept in the continuous on state or may be put into a sleep state to reduce the energy consumption. Embodiment three; embodiment three is according to the appended claims.

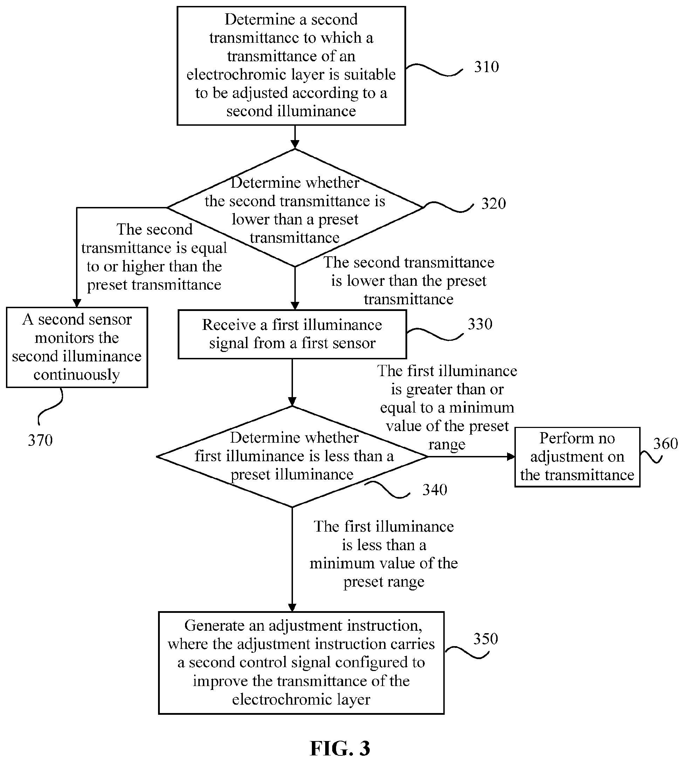

FIG. 3 is a flowchart of a method for controlling an electrochromic glass according to embodiment three of the present application. As shown in FIG. 3, specific steps are described below.

In step 310, a second transmittance to which a transmittance of an electrochromic layer is to be adjusted is determined according to a second illuminance.

In the embodiment of the present application, a related determination of the second illuminance is a condition for triggering an adjustment process, and a related determination of a first illuminance is a condition for feedback adjustment. The second illuminance is detected by a second sensor, and the second transmittance to which the transmittance of the electrochromic layer is suitable to be adjusted is determined according to the second illuminance detected by the second sensor. The second sensor is disposed on a side of the electrochromic layer facing the interior space, and a light-sensing surface faces a light incident side of ambient light. Exemplarily, when the second illuminance exceeds a maximum value of a preset range, it is indicated that the intensity of light entering the interior space through the electrochromic layer is too strong, and in this case, the visible light transmittance of the electrochromic layer is adjusted to be lower; and when the second illuminance is less than a minimum value of the preset range, it is indicated that the intensity of light entering the interior space through the electrochromic layer is relatively weak and the visible light transmittance of the electrochromic layer is adjusted to be higher. Exemplarity, the electrochromic glass includes an outer glass, an electrochromic layer and an inner glass, and the second sensor may be disposed on the electrochromic layer of the electrochromic glass on a side facing the inner glass, between the electrochromic layer and the inner glass, on the inner glass or on any required position in the interior space, for example, on an office desk. A photosensitive optical path of the second sensor is adjusted to collect light irradiated to the office desk through the electrochromic glass and determine whether the light entering the room reaches an expectation target. When the second illuminance is greater than a preset value of illuminance, the indoor light is too strong, which affects the work comfort of the user. The position of the second sensor may be fixed or movable, and the second sensor may be connected to a processor module via a line or may be wirelessly connected to the processor module for signal transmission. In step 320, whether the second transmittance is lower than a preset transmittance is determined; if the second transmittance is lower than the preset transmittance, step 330 is performed; and if the second transmittance is equal to or higher than the preset transmittance, step 370 is performed. The above preset transmittance is generally low. When the second transmittance is lower than the preset transmittance, even if the illuminance of the ambient light is weakened, the amount of light passing through the electrochromic layer is changed very little. Therefore, it is difficult for the second sensor to sensitively detect the change in the illuminance of the ambient light in an external ambient space. Therefore, when the second transmittance is lower than the preset transmittance, it is difficult to trigger the adjustment of the transmittance of the electrochromic layer again only through the adjustment of the second sensor. In this case, whether the second transmittance is lower than the preset transmittance is determined; when the second transmittance is lower than the preset transmittance, step 330 is performed; and when the second transmittance is not lower than the preset transmittance, step 370 is performed.

In step 330, a first illuminance signal is received from a first sensor.

When the second transmittance is lower than the preset transmittance, if the illuminance of the ambient light in the external ambient space is weakened, it is difficult for the second sensor to sensitively detect the change in the illuminance of the external ambient light. Therefore, the transmittance of the electrochromic layer requires to be adjusted in conjunction with the first illuminance. In the present embodiment, the first sensor may be kept in a continuous on state or may be awakened in, before or after any one of the steps before step 330. As a preferred embodiment, after it is determined that the second transmittance is lower than the preset transmittance, the first sensor is awakened.

In step 340, whether a first illuminance is less than a minimum value of a preset range is determined; if the first illuminance is less than the minimum value of the preset range, step 350 is performed; and if the first illuminance is greater than or equal to the minimum value of the preset range, step 360 is performed.

If the first illuminance is less than the minimum value of the preset range, a feedback adjustment requires to be performed on the transmittance of the electrochromic layer according to the first illuminance. This is because although the first illuminance of the ambient light in the ambient space is weakened, since the second transmittance of the electrochromic layer is very low, it is difficult for the second sensor to sensitively detect the change in the illuminance of the ambient light. In this case, the feedback adjustment requires to be performed depending on the first illuminance detected by the first sensor to trigger adjusting the transmittance of the electrochromic layer to be higher.

In step 350, an adjustment instruction is generated, where the adjustment instruction carries a second control signal configured to improve the transmittance of the electrochromic layer.

The adjustment instruction carries the second control signal configured to improve the transmittance of the electrochromic layer. Exemplarity, a specific method for improving the transmittance of the electrochromic layer may include: improving the transmittance step by step until the transmittance of the electrochromic layer matches the first illuminance; or directly determining a fourth transmittance to which the transmittance of the electrochromic layer is suitable to be adjusted according to the first illuminance and then directly adjusting the transmittance of the electrochromic layer to the fourth transmittance.

In step 360, no adjustment is performed on the transmittance.

If the first illuminance is not less than the minimum value of the preset range, that is, the first illuminance is greater than the maximum value of the preset range or is within the preset range, no feedback adjustment requires to be performed on the transmittance of the electrochromic layer according to the first illuminance.

In step 370, the second illuminance is continuously monitored by the second sensor.

In the case where the second transmittance is higher than or equal to the preset transmittance, when the illuminance of the ambient light changes, the second sensor can detect the change sensitively. In this case, a good adjustment effect can be achieved through only monitoring by the second sensor. After the adjustment of the transmittance of the electrochromic layer is completed, this adjustment ends. The second sensor monitors the second illuminance continuously and waits for the next adjustment. The first sensor may be kept in the continuous on state or may be put into a sleep state to reduce the energy consumption.

Embodiment four; embodiment four is not according to the appended claims.

On the basis of the technical solution of the preceding embodiment, it is further included that the transmittance of the electrochromic layer is adjusted only according to the second illuminance. Specific steps are described below.

A third transmittance to which the transmittance of the electrochromic layer is suitable to be adjusted is determined according to the second illuminance of the ambient light passing through the electrochromic layer.

The adjustment instruction is generated, where the adjustment instruction carries a third control signal configured to adjust the transmittance of the electrochromic layer to the third transmittance. In the present embodiment, in some usage scenarios, the principle of directly adjusting the transmittance of the electrochromic layer by the second illuminance detected by the second sensor is similar to that in the preceding embodiment, which are not repeated here. In the present embodiment, when the transmittance of the electrochromic layer is too low to trigger the active adjustment for a higher transmittance of the electrochromic glass, the transmittance of the electrochromic glass may be manually adjusted to be higher by a user.

### Embodiment five

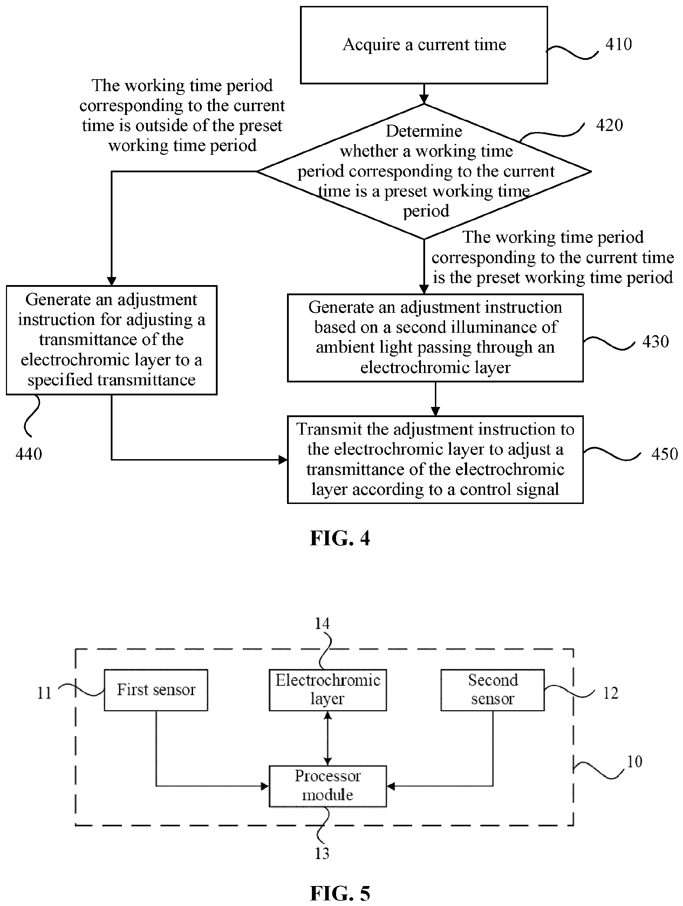

FIG. 4 is a flowchart of a method for controlling an electrochromic glass according to embodiment five of the present application.

As shown in FIG. 4, specific steps are described below.

In step 410, a current time is acquired.

In step 420, whether a working time period corresponding to the current time is a preset working time period is determined; if the working time period corresponding to the current time is the preset working time period, step 430 is performed; and if the working time period corresponding to the current time is outside of the preset working time period, step 440 is performed. According to a specific usage scenario, time of one day is divided into multiple working time periods, and different working time periods correspond to different control manners. The above preset working time period is a time period from sunrise to sunset. During the time period, a transmittance of the electrochromic layer requires to be adjusted according to ambient light, so as to meet a user's requirement for illuminance in the interior space. For example, at a particular location, the user's latitude, solar declination angle and current solar angle are provided so that a solar altitude angle at any local moment can be simulated by software, and the user's longitude and latitude, date and time zone information are provided so that local sunrise and sunset time can be simulated. Exemplarily, 0:00 to 6:00 is a late-night working time period, 6:00 to 12:00 is a sunrise working time period, 12:00 to 19:00 is a sunset working time period, 19:00 to 24:00 is a nighttime working time period, and corresponding preset working time periods are the sunrise working time period and the sunset working time period. In another example, 6:00 to 19:00 is a daytime working time period, 19:00 to 6:00 next day is a night working time period, and a corresponding preset working time period is the daytime working time period. The above divided time periods may be personalized according to a specific usage scenario, such as a season of a location and usage time of a building.

In step 430, an adjustment instruction is generated based on a second illuminance of ambient light passing through an electrochromic layer.

After it is determined that the current time belongs to the preset working time period, the adjustment instruction is generated based on the second illuminance of the ambient light passing through the electrochromic layer. For a specific step of generating the adjustment instruction, reference is made to the preceding embodiments one to four, which are not repeated here.

In step 440, an adjustment instruction for adjusting a transmittance of the electrochromic layer to a specified transmittance is generated.

After it is determined that the current time does not belong to the preset working time period, the adjustment instruction for the specified transmittance is generated according to a working time period where the current time is located. For example, when the current time is the nighttime working time period, the user does not want indoors to be seen by outdoors for most of the time and thus an adjustment instruction for controlling the transmittance of the electrochromic layer to be a minimum transmittance is generated, and if the user has a requirement such as viewing a night scene, the transmittance of the electrochromic glass may be manually adjusted to be the maximum transmittance; and when the current time is the late-night working time period, the electrochromic glass is not used in wee hours, and thus the electrochromic layer may be adjusted to the most stable state to extend a service life of the electrochromic layer. The electrochromic glass is a polar device, and is generally in the most stable state when in a short circuit state. Therefore, an adjustment instruction for adjusting the electrochromic layer to be in the short circuit state is generated, so as to extend the lifetime of the electrochromic device. The stable state differs according to different materials of the electrochromic layer. For example, for different materials, the stable state of the electrochromic layer may be a darkest state, a brightest state or an intermediate state of transmittance.

In step 450, the adjustment instruction is transmitted to the electrochromic layer to adjust the transmittance of the electrochromic layer according to a control signal.

The transmittance of the electrochromic layer is adjusted according to the control signal in the generated adjustment instruction.

The addition of the time control not only meets the user's requirements for the illuminance in the internal space in different time periods but also helps to save the energy consumption and extending the lifetime of the electrochromic device.

### Embodiment six

In each preceding embodiment, the electrochromic layer includes at least one electrochromic cell whose transmittance is capable of being separately adjusted, and the adjustment instruction further carries a dimming sequence signal, and the adjustment instruction is configured to control the transmittance of each of the at least one electrochromic cell to be sequentially adjusted according to the dimming sequence signal. When the electrochromic layer is one electrochromic cell whose transmittance is capable of being independently adjusted, the transmittance of the one electrochromic cell can be adjusted as a whole; and when the electrochromic layer is formed by splicing multiple electrochromic cells of small size, the transmittances of the multiple electrochromic cells can be adjusted in a partitioned manner, and the adjustment instruction carries the dimming sequence signal so that each electrochromic cell of the electrochromic layer sequentially changes in color. In a specific embodiment, when the working time period corresponding to the current time is the sunrise working time period, as time goes on, the sun slowly rises from a horizon, an angle of incidence of sunlight gradually increases, and a position irradiated by the light is moved upward from a lower end of the electrochromic glass. Exemplarily, when the electrochromic layer is formed by splicing multiple electrochromic cells, preferably, the electrochromic layer is formed by splicing multiple electrochromic cells in rows so that the transmittance adjustment is performed row by row. The positions of sensors are adjusted according to a requirement of a scenario. For example, a top of the electrochromic cell in each row may be provided with a sensor, and the transmittances of the electrochromic cells is controlled to be reduced in sequence from bottom to top according to the generated adjustment instruction. In another specific embodiment, when the working time period corresponding to the current time is the sunset working time period, the outdoor light irradiated on the electrochromic glass is gradually weakened from top to bottom, and the transmittance adjustment of the electrochromic cells starts from an uppermost row. The transmittance adjustment of the electrochromic cells is logically consistent with that during the sunrise working time period and not repeated here. When the electrochromic layer includes two or more electrochromic cells whose transmittances are capable of being separately adjusted, the transmittance of each electrochromic cell is adjusted according to the dimming sequence signal, and after each adjustment of the transmittance of one electrochromic cell, whether the second illuminance is within the preset range may be determined. If the second illuminance has been within the preset range, the subsequent adjustment is stopped; and if the second illuminance is not within the preset range, adjustment of the transmittance of the next electrochromic cell is continued. In a specific embodiment, the electrochromic layer includes multiple electrochromic cells, the second sensor is mounted at a certain indoor position (such as a conference table), the control signal is triggered by the second sensor, and the first sensor is in a feedback state. During the sunrise working time period, the adjustment of the transmittance of the electrochromic layer starts from the electrochromic cell in the lowermost layer. After the transmittance of the electrochromic cell in the lowermost layer is adjusted, if the second sensor detects that glare is blocked, the adjustment of the transmittance ends without adjusting the transmittance of other electrochromic cells; and if the second sensor can still detect glare, the transmittance of the electrochromic cell in a penultimate layer is sequentially adjusted. The dimming sequence signal is added to the method for controlling an electrochromic glass and configured to control the respective electrochromic cells of the electrochromic layer to sequentially change in color. For example, different color-changing sequences are used for the sunrise working time period and the sunset working time period so that the adjustment of the indoor illuminance is more accurate, which is particularly suitable for a relatively open environment or a high floor not blocked by a building, such as an airport lounge, an airport control tower, a high-rise office building and residence.

In each preceding embodiment, manual adjustment may be further included. The user may perform personalized adjustment according to the requirement and configure a priority of the manual adjustment to be the highest. When the automatic adjustment and the manual adjustment simultaneously issue an adjustment instruction, the adjustment instruction of the manual adjustment is preferentially executed.

### Embodiment seven

FIG. 5 is a block diagram illustrating a composition of an electrochromic glass according to embodiment seven of the present application. As shown in FIG. 5, the electrochromic glass according to the embodiment of the present application may perform the method for controlling the electrochromic glass according to any embodiment of the present application and has function modules and beneficial effects corresponding to the performed method.

An electrochromic glass 10 includes a second sensor 12, a processor module 13 and an electrochromic layer 14.

The second sensor 12 is configured to convert an optical signal to an electrical signal and send the converted electrical signal to the processor module 13.

The second sensor 12 is disposed on a side of the electrochromic layer 14 facing away from the incidence of ambient light, and a light-sensing surface of the second sensor 12 faces a light incident side of the ambient light.

The processor module 13 is configured to generate an adjustment instruction based on a second illuminance of the ambient light passing through the electrochromic layer, where the adjustment instruction carries a control signal; and the adjustment instruction is transmitted to the electrochromic layer 14 to adjust a transmittance of the electrochromic layer 14 according to the control signal.

In an embodiment, the processor module 13 adjusts a voltage applied to the electrochromic layer 14, and adjusts the transmittance of the electrochromic layer 14.

Optionally, the electrochromic glass 10 further includes a first sensor 11, where the first sensor 11 is configured to convert an optical signal to an electrical signal and send the converted electrical signal to the processor module 13; the first sensor 11 is disposed on a side of the electrochromic layer 14 facing the incidence of the ambient light, and a light-sensing surface of the first sensor 11 faces in a direction toward the incidence of the ambient light.

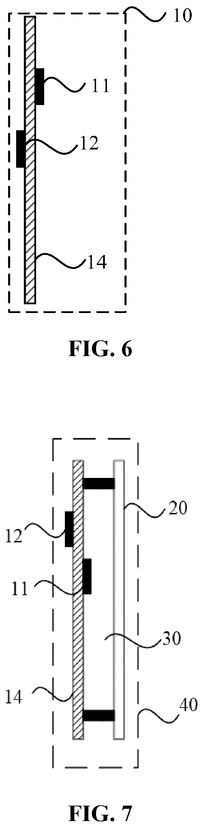

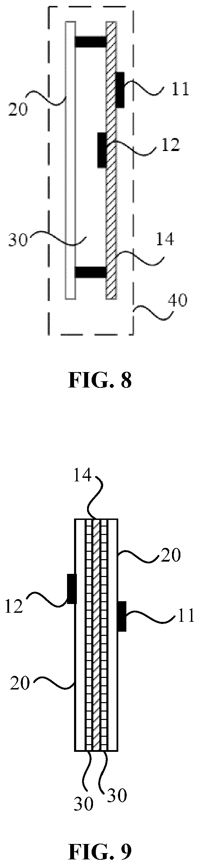

FIG. 6 is a structure diagram of an electrochromic glass according to embodiment seven of the present application. FIG. 7 is a structure diagram of another electrochromic glass according to embodiment seven of the present application. FIG. 8 is a structure diagram of an alternative embodiment of another electrochromic glass according to embodiment seven of the present application. The electrochromic glass may be insulating glass, and the electrochromic layer includes at least one electrochromic cell whose transmittance is capable of being separately adjusted.

As shown in FIG. 6, the first sensor 11 is disposed at a preset position on the side of the electrochromic layer 14 facing the incidence of the ambient light, and the second sensor 12 is disposed at a preset position on the side of the electrochromic layer 14 facing away from the incidence of the ambient light. The second sensor 12 may be disposed in close contact with the electrochromic layer 14 or may be disposed at a position where light intensity requires to be detected. Exemplarily, the second sensor 12 is disposed on a table top of a conference table. The electrochromic glass 10 includes the electrochromic layer 14, which may be a flexible or rigid sheet layer with the adjustable transmittance and made of one layer of material or a combination of multiple layers of materials, including types such as PDLC glass, an SPD and EC glass. The detailed structural characteristics of this part are within the understanding of those skilled in the art and are not repeated here.

As shown in FIG. 7, in an embodiment, the electrochromic glass 10 may be an insulating glass 40 and further includes an ordinary glass layer 20, where an insulating layer 30 of the insulating glass 40 is formed between the ordinary glass layer 20 and an electrochromic layer 14, and the electrochromic layer 14 and the ordinary glass layer 20 are correspondingly disposed to constitute the double-layer insulating glass 40. As shown in FIG. 7, the ordinary glass layer 20 is disposed at a side of the electrochromic layer 14 facing the incidence of ambient light, a first sensor 11 may be disposed inside the insulating layer 30, and a second sensor 12 may be disposed at a preset position on a side of the electrochromic layer 14 facing away from the incidence of the ambient light. The second sensor 12 may be disposed in close contact with the side of the electrochromic layer 14 facing away from the incidence of the ambient light or may be disposed at a position where light intensity requires to be detected. The electrochromic layer 14 is disposed on a side of the ordinary glass layer 20 adjacent to the insulating layer 30, and an outer ordinary glass layer 20 can protect an electronic component on the electrochromic glass 10. In an alternative embodiment, the first sensor 11 may be disposed in close contact with a side of the ordinary glass layer 20 facing away from the insulating layer 30 or may be disposed at a preset position in the exterior space. For example, the preset position in the exterior space may be on a frame structure close to the electrochromic glass.

As shown in FIG. 8, in an alternative embodiment, when the ordinary glass layer 20 is disposed on the side of the electrochromic layer 14 facing away from the incidence of the ambient light, that is, the electrochromic layer 14 gets close to the ambient space, the second sensor 12 may be disposed inside the insulating layer 30, and the first sensor 11 may be disposed at a preset position on the side of the electrochromic layer 14 facing the incidence of the ambient light. The first sensor 11 may be disposed in close contact with the side of the electrochromic layer 14 facing the incidence of the ambient light or may be disposed at another position. In an alternative embodiment, the second sensor 12 may be disposed in close contact with an inner side of the ordinary glass layer 20 or may be disposed at a preset position of the interior space. For example, the preset position in the interior space may be on an indoor conference table.

FIG. 9 is a structure diagram of another electrochromic glass according to embodiment seven of the present application. The electrochromic glass may be laminated glass. As shown in FIG. 9, the laminated glass is composite glass formed by sandwiching two organic polymer intermediate films 30 and one electrochromic layer 14 between two ordinary glass layers 20. Common intermediate films of the laminated glass include polyvinyl butyral (PVB), a Sentry Glas Plus (SGP) ionic intermediate film, an ethylene-vinyl acetate (EVA) copolymer, polyurethane (PU) and the like. A second sensor 12 is disposed on an indoor side, that is, an outer surface of one of the two ordinary glass layers 20 facing away from the incidence of ambient light, and a first sensor 11 is disposed on an outdoor side, that is, an outer surface of the other one of the two ordinary glass layers 20 facing the incidence of the ambient light. In an alternative embodiment, the second sensor 12 may also be disposed between the electrochromic layer 14 and the ordinary glass layer 20, for example, disposed in the organic polymer intermediate film 30, between the electrochromic layer 14 and the organic polymer intermediate film 30, between the ordinary glass layer 20 and the organic polymer intermediate film 30 or the like; and the first sensor 11 may also be disposed between the electrochromic layer 14 and the ordinary glass layer 20, for example, disposed in the organic polymer intermediate film 30, between the electrochromic layer 14 and the organic polymer intermediate film 30, between the ordinary glass layer 20 and the organic polymer intermediate film 30 or the like.

Even if the laminated glass is crushed by an impact, fragments of the laminated glass, as a safety glass, will be adhered to the thin film due to the adhesion of the intermediate film, and a surface of the crushed glass still remains clean and smooth, thereby effectively preventing the fragments from the occurance of pricking and falling accident due to penetrating, and thus ensuring the personal safety. Moreover, the intermediate film of the laminated glass has the performance of voice insulating and sunlight controlling. Therefore, the laminated glass can not only isolate noise but also block ultraviolet and absorb heat in infrared spectrum, having functions of energy saving and environmental protection.

In an embodiment, a manual module is further included. The manual module is connected to the processor module 13 through a signal, and the manual module is configured to manually adjust a transmittance of the electrochromic glass according to the user's personalized requirement.

### Embodiment eight

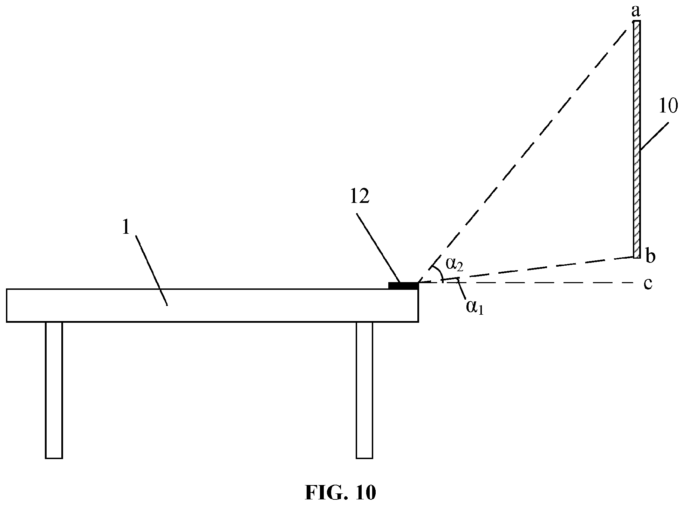

FIG. 10 is a schematic diagram illustrating an application of an electrochromic glass according to embodiment eight of the present application. As shown in FIG. 10, a second sensor 12 is disposed at a corresponding position of a table top of an indoor office or conference table 1, and an electrochromic glass 10 is disposed at a distance from the table top of the office or conference table 1. The second sensor 12 can collect light irradiated to the office desk through the electrochromic glass 10 to determine whether the light entering the room reaches the expectation.

As shown in FIG. 10, an included angle between dotted lines b and c is α₁, and an included angle between dotted lines a and c is α₂. An opening angle α of a photosensitive optical path of the second sensor 12 meets: α₁ < α < α₂, and all incident light within this angle can be detected by the second sensor 12. The second sensor 12 may be fixed or movable, and the photosensitive optical path of the second sensor 12 is adjusted according to the disposed position, so as to detect the illuminance of light at different positions.

Exemplarity, it is required that within a range of a distance L from a window edge, strong light has no effect on a user. Assuming that a relative height of the glass top to the table top is H and a relative height of the glass bottom to the table top is h, the opening angle of the optical path of the sensor at a corresponding position requires to be set to arctan(h/L) to arctan(H/L). The transmittance of the electrochromic glass connected to the sensor is adjusted, meeting the requirement of no strong light within the range of the distance L from the window edge and a user's requirement for personalizing the electrochromic glass according to different usage scenarios.

## Claims

1. A method for controlling an electrochromic glass (10), the electrochromic glass (10) comprising an electrochromic layer (14) and a processor module (13), and the method for controlling the electrochromic glass (10) being performed by the processor module (13) and comprising:
generating (110) an adjustment instruction based on a second illuminance of ambient light passing through the electrochromic layer (14), wherein the adjustment instruction carries a control signal; and
transmitting (120) the adjustment instruction to the electrochromic layer (14) to adjust a transmittance of the electrochromic layer (14) according to the control signal;
wherein generating (110) the adjustment instruction based on the second illuminance of the ambient light passing through the electrochromic layer (14) comprises:
generating the adjustment instruction based on a first illuminance and the second illuminance, wherein the first illuminance is an illuminance of the ambient light before entering the electrochromic layer (14),
**characterized in that**
generating the adjustment instruction based on the first illuminance and the second illuminance comprises:
determining (310) a second transmittance to which the transmittance of the electrochromic layer (14) is to be adjusted according to the second illuminance, wherein the second illuminance is detected by a second sensor;
determining (320) whether the second transmittance is lower than a preset transmittance;
in response to a determination result that the second transmittance is lower than the preset transmittance, receiving (330) the first illuminance sent by a first sensor configured to detect the first illuminance;
determining (340) whether the first illuminance is less than a minimum value of a preset range; and
in response to a determination result that the first illuminance is less than the minimum value of the preset range, generating (350) the adjustment instruction, wherein the adjustment instruction carries a second control signal configured to increase the transmittance of the electrochromic layer (14).

2. The method for controlling the electrochromic glass (10) according to claim 1, before generating (110) the adjustment instruction based on the second illuminance of the ambient light passing through the electrochromic layer (14), further comprising:
determining (420) whether a working time period corresponding to a current time is a preset working time period; and
in response to a determination result that the working time period corresponding to the current time is the preset working time period, generating (430) the adjustment instruction based on the second illuminance of the ambient light passing through the electrochromic layer (14); and in response to a determination result that the working time period corresponding to the current time is outside of the preset working time period, generating (440) an adjustment instruction for adjusting the transmittance of the electrochromic layer (14) to a specified transmittance.

3. The method for controlling the electrochromic glass (10) according to claim 1, wherein the electrochromic layer (14) comprises at least one electrochromic cell whose transmittance is capable of being separately adjusted, the adjustment instruction further carries a dimming sequence signal, and the adjustment instruction is configured to control the transmittance of the at least one electrochromic cell to be sequentially adjusted according to the dimming sequence signal.

4. An electrochromic glass (10), comprising a second sensor (12), a processor module (13) and an electrochromic layer (14), wherein:
the second sensor (12) is configured to convert an optical signal to an electrical signal and send the electrical signal to the processor module (13);
the second sensor (12) is disposed on a side of the electrochromic layer (14) facing away from incidence of ambient light, and a light-sensing surface of the second sensor (12) faces in a direction toward the incidence of the ambient light; and
the processor module (13) is configured to implement the method for controlling the electrochromic glass according to any one of claims 1 to 3.

5. The electrochromic glass (10) according to claim 4, wherein the electrochromic glass (10) further comprises a first sensor (11) configured to convert an optical signal to an electrical signal and send the electrical signal to the processor module (13); and wherein the first sensor (11) is disposed on a side of the electrochromic layer (14) facing the incidence of the ambient light, and a light-sensing surface of the first sensor (11) faces in the direction toward the incidence of the ambient light.

6. The electrochromic glass (10) according to claim 4, wherein the electrochromic glass (10) is laminated glass or insulating glass, and the electrochromic layer (14) comprises at least one electrochromic cell whose transmittance is capable of being separately adjusted.

## Patentansprüche

1. Verfahren zur Regelung eines elektrochromen Glases (10), wobei das elektrochrome Glas (10) eine elektrochrome Schicht (14) und ein Prozessormodul (13) umfasst und das Verfahren zur Regelung des elektrochromen Glases (10) durch das Prozessormodul (13) durchgeführt wird und Folgendes umfasst:
Generieren (110) einer Anpassungsanweisung basierend auf einer zweiten Beleuchtungsstärke von Umgebungslicht, das durch die elektrochrome Schicht (14) hindurchtritt, wobei die Anpassungsanweisung ein Regelungssignal enthält, und
Übertragen (120) der Anpassungsanweisung an die elektrochrome Schicht (14) zum Anpassen der Lichtdurchlässigkeit der elektrochromen Schicht (14) gemäß dem Regelungssignal,
wobei das Generieren (110) der Anpassungsanweisung basierend auf der zweiten Beleuchtungsstärke des Umgebungslichts, das durch die elektrochrome Schicht (14) hindurchtritt, Folgendes umfasst:
Generieren der Anpassungsanweisung basierend auf einer ersten Beleuchtungsstärke und der zweiten Beleuchtungsstärke, wobei die erste Beleuchtungsstärke eine Beleuchtungsstärke des Umgebungslichts vor dem Eintreten in die elektrochrome Schicht (14) ist, **dadurch gekennzeichnet, dass** das Generieren der Anpassungsanweisung basierend auf der ersten Beleuchtungsstärke und der zweiten Beleuchtungsstärke Folgendes umfasst:
Bestimmen (310) einer zweiten Lichtdurchlässigkeit, an die die Lichtdurchlässigkeit der elektrochromen Schicht (14) gemäß der zweiten Beleuchtungsstärke anzupassen ist, wobei die zweite Beleuchtungsstärke durch einen zweiten Sensor erkannt wird;
Bestimmen (320), ob die zweite Lichtdurchlässigkeit geringer als eine voreingestellte Lichtdurchlässigkeit ist;
als Reaktion auf ein Bestimmungsergebnis, dass die zweite Lichtdurchlässigkeit geringer als die voreingestellte Lichtdurchlässigkeit ist, Empfangen (330) der durch einen ersten Sensor, der ausgelegt ist, um die erste Beleuchtungsstärke zu erkennen, gesendeten ersten Beleuchtungsstärke;
Bestimmen (340), ob die erste Beleuchtungsstärke niedriger als ein Mindestwert eines voreingestellten Bereichs ist, und
als Reaktion auf ein Bestimmungsergebnis, dass die erste Beleuchtungsstärke niedriger als der Mindestwert des voreingestellten Bereichs ist, Generieren (350) der Anpassungsanweisung, wobei die Anpassungsanweisung ein zweites Regelungssignal enthält, das ausgelegt ist, um die Lichtdurchlässigkeit der elektrochromen Schicht (14) zu erhöhen.

2. Verfahren zur Regelung des elektrochromen Glases (10) nach Anspruch 1, das vor dem Generieren (110) der Anpassungsanweisung basierend auf der zweiten Beleuchtungsstärke des Umgebungslichts, das durch die elektrochrome Schicht (14) hindurchtritt, ferner Folgendes umfasst:
Bestimmen (420), ob ein Arbeitszeitraum, der einer aktuellen Zeit entspricht, ein voreingestellter Arbeitszeitraum ist, und
als Reaktion auf ein Bestimmungsergebnis, dass der Arbeitszeitraum, der der aktuellen Zeit entspricht, der voreingestellte Arbeitszeitraum ist, Generieren (430) der Anpassungsanweisung basierend auf der zweiten Beleuchtungsstärke des Umgebungslichts, das durch die elektrochrome Schicht (14) hindurchtritt, und als Reaktion auf ein Bestimmungsergebnis, dass der Arbeitszeitraum, der der aktuellen Zeit entspricht, außerhalb des voreingestellten Arbeitszeitraums liegt, Generieren (440) einer Anpassungsanweisung zum Anpassen der Lichtdurchlässigkeit der elektrochromen Schicht (14) an eine angegebene Lichtdurchlässigkeit.

3. Verfahren zur Regelung des elektrochromen Glases (10) nach Anspruch 1, wobei die elektrochrome Schicht (14) mindestens eine elektrochrome Zelle umfasst, deren Lichtdurchlässigkeit fähig ist, separat angepasst zu werden, wobei die Anpassungsanweisung ferner ein Dimmsequenzsignal enthält und die Anpassungsanweisung ausgelegt ist, um die Lichtdurchlässigkeit der mindestens einen elektrochromen Zelle so zu regeln, dass diese gemäß dem Dimmsequenzsignal sequentiell angepasst wird.

4. Elektrochromes Glas (10), umfassend einen zweiten Sensor (12), ein Prozessormodul (13) und eine elektrochrome Schicht (14), wobei:
der zweite Sensor (12) ausgelegt ist, um ein optisches Signal in ein elektrisches Signal umzuwandeln und das elektrische Signal an das Prozessormodul (13) zu senden;
der zweite Sensor (12) auf einer Seite der elektrochromen Schicht (14) angeordnet ist, die dem Einfall von Umgebungslicht abgewandt ist, und eine Lichtsensoroberfläche des zweiten Sensors (12) einer Richtung hin zu dem Einfall des Umgebungslichts zugewandt ist und
das Prozessormodul (13) ausgelegt ist, um das Verfahren zur Regelung des elektrochromen Glases nach einem der Ansprüche 1 bis 3 umzusetzen.

5. Elektrochromes Glas (10) nach Anspruch 4, wobei das elektrochrome Glas (10) ferner einen ersten Sensor (11) umfasst, der ausgelegt ist, um ein optisches Signal in ein elektrisches Signal umzuwandeln und das elektrische Signal an das Prozessormodul (13) zu senden, und wobei der erste Sensor (11) auf einer Seite der elektrochromen Schicht (14) angeordnet ist, die dem Einfall des Umgebungslichts zugewandt ist, und eine Lichtsensoroberfläche des ersten Sensors (11) der Richtung hin zu dem Einfall des Umgebungslichts zugewandt ist.

6. Elektrochromes Glas (10) nach Anspruch 4, wobei das elektrochrome Glas (10) Verbundglas oder Isolierglas ist und die elektrochrome Schicht (14) mindestens eine elektrochrome Zelle umfasst, deren Lichtdurchlässigkeit fähig ist, separat angepasst zu werden.

## Revendications

1. Procédé de commande d'un verre électrochromique (10), le verre électrochromique (10) comprenant une couche électrochromique (14) et un module de traitement (13), et le procédé de commande du verre électrochromique (10) étant effectué par le module de traitement (13) et comprenant :
la génération (110) d'une instruction d'ajustement sur la base d'un deuxième éclairement de la lumière ambiante traversant la couche électrochromique (14), dans lequel l'instruction d'ajustement porte un signal de commande ; et
la transmission (120) de l'instruction d'ajustement à la couche électrochromique (14) pour ajuster une transmittance de la couche électrochromique (14) en fonction du signal de commande ;
dans lequel la génération (110) de l'instruction d'ajustement sur la base du deuxième éclairement de la lumière ambiante traversant la couche électrochromique (14) comprend :
la génération de l'instruction d'ajustement sur la base d'un premier éclairement et du deuxième éclairement, dans lequel le premier éclairement est un éclairement de la lumière ambiante avant de pénétrer la couche électrochromique (14), **caractérisé en ce que** la génération de l'instruction d'ajustement sur la base du premier éclairement et du deuxième éclairement comprend :
la détermination (310) d'une deuxième transmittance à laquelle la transmittance de la couche électrochromique (14) doit être ajustée en fonction du deuxième éclairement, dans lequel le deuxième éclairement est détecté par un deuxième capteur ;
la détermination (320) si la deuxième transmittance est inférieure à une transmittance prédéfinie ;
en réponse à un résultat de détermination selon lequel la deuxième transmittance est inférieure à la transmittance prédéfinie, la réception (330) du premier éclairement envoyé par un premier capteur configuré pour détecter le premier éclairement ;
la détermination (340) si le premier éclairement est inférieur à une valeur minimale d'une plage prédéfinie ; et
en réponse à un résultat de détermination selon lequel le premier éclairement est inférieur à la valeur minimale de la plage prédéfinie, la génération (350) de l'instruction d'ajustement, dans lequel l'instruction d'ajustement porte un deuxième signal de commande configuré pour augmenter la transmittance de la couche électrochromique (14).

2. Procédé de commande du verre électrochromique (10) selon la revendication 1, avant la génération (110) de l'instruction d'ajustement sur la base du deuxième éclairement de la lumière ambiante traversant la couche électrochromique (14), comprenant en outre :
la détermination (420) si une période de travail correspondant à un temps actuel est une période de travail prédéfinie ; et
en réponse à un résultat de détermination selon lequel la période de travail correspondant au temps actuel est la période de travail prédéfinie, la génération (430) de l'instruction d'ajustement sur la base du deuxième éclairement de la lumière ambiante traversant la couche électrochromique (14) ; et en réponse à un résultat de détermination selon lequel la période de travail correspondant au temps actuel est en dehors de la période de travail prédéfinie, la génération (440) d'une instruction d'ajustement pour ajuster la transmittance de la couche électrochromique (14) à une transmittance spécifiée.

3. Procédé de commande du verre électrochromique (10) selon la revendication 1, dans lequel la couche électrochromique (14) comprend au moins une cellule électrochromique dont la transmittance peut être ajustée séparément, l'instruction d'ajustement porte en outre un signal de séquence de gradation, et l'instruction d'ajustement est configurée pour commander la transmittance de l'au moins une cellule électrochromique à ajuster en séquence en fonction du signal de séquence de gradation.

4. Verre électrochromique (10), comprenant un deuxième capteur (12), un module de traitement (13) et une couche électrochromique (14), dans lequel :
le deuxième capteur (12) est configuré pour convertir un signal optique en un signal électrique et envoyer le signal électrique au module de traitement (13) ;
le deuxième capteur (12) est disposé sur un côté de la couche électrochromique (14) faisant face à l'opposé de l'incidence de la lumière ambiante, et une surface de détection de lumière du deuxième capteur (12) est orientée vers l'incidence de la lumière ambiante ; et
le module de traitement (13) est configuré pour mettre en œuvre le procédé de commande du verre électrochromique selon l'une quelconque des revendications 1 à 3.

5. Verre électrochromique (10) selon la revendication 4, dans lequel le verre électrochromique (10) comprend en outre un premier capteur (11) configuré pour convertir un signal optique en un signal électrique et envoyer le signal électrique au module de traitement (13) ; et dans lequel le premier capteur (11) est disposé sur un côté de la couche électrochromique (14) faisant face à l'incidence de la lumière ambiante, et une surface de détection de lumière du premier capteur (11) est orientée vers l'incidence de la lumière ambiante.

6. Verre électrochromique (10) selon la revendication 4, dans lequel le verre électrochromique (10) est un verre feuilleté ou un verre isolant, et la couche électrochromique (14) comprend au moins une cellule électrochromique dont la transmittance peut être ajustée séparément.
